**Europäisches Patentamt**

**European Patent Office**

**Office européen des brevets**

(19)

(11) Veröffentlichungsnummer: **0 040 823**
**A1**

(12) **EUROPÄISCHE PATENTANMELDUNG**

(21) Anmeldenummer: **81103912.2**

(22) Anmeldetag: **21.05.81**

(51) Int. Cl.³: **A 23 N 12/12**

(30) Priorität: **27.05.80 IT 1255180**

(43) Veröffentlichungstag der Anmeldung: **02.12.81**
**Patentblatt 81/48**

(84) Benannte Vertragsstaaten: **AT BE CH DE FR GB LI LU NL SE**

(71) Anmelder: **OFFICINE VITTORIA S.P.A., Via F.Milani 10, I-40135 Bologna (IT)**

(72) Erfinder: **Bianchi, Maurizio, Via Irnerio 23, I-40126 Bologna (IT)**

(74) Vertreter: **Porsia, Dino, c/o Succ. Ing. Fischetti & Weber Via Caffaro 3, I-16124 Genova (IT)**

(54) **Steuervorrichtung für Röstmaschinen.**

(57) Zum selbsttätigen Ausschalten einer Röstmaschine, insbesondere einer Kaffeeröstmaschine, ist ein Farbmeßgerät (A) vorgesehen, das ein der Farbe des Röstguts (P) in der Röstmaschine entsprechendes elektrisches Meßsignal liefert. Dieses Meßsignal wird in einer Vergleichsschaltung (14) mit einem elektrischen Bezugssignal verglichen, das der Farbe einer fertig gerösteten Röstgutprobe (P') entspricht und von einem weiteren Farbmeßgerät (F) geliefert wird. Das Ausgangssignal der Vergleichsschaltung (14) wird einer Logikschaltung (20) zugeführt, die beim Erreichen eines vorbestimmten, einstellbaren Differenzwertes zwischen dem Meßsignal und dem Bezugssignal die zum Stillsetzen der Röstmaschine erforderlichen Funktionen in der richtigen Reihenfolge auslöst.

EP 0 040 823 A1

ACTORUM AG

- 1 -

0040823

OFFICINE VITTORIA S.p.A.,
Bologna (Italien).

## Steuervorrichtung für Röstmaschinen

Die Erfindung betrifft eine Steuervorrichtung für Röstma=
schinen, insbesondere Kaffeeröstmaschinen od. dgl.

Aufgabe der Erfindung ist es, die Röstmaschine automatisch
abzuschalten, d.h. die zum Stillsetzen der Röstmaschine am
Ende eines Röstvorgangs erforderlichen Funktionen in der
richtigen Reihenfolge selbsttätig auszulösen, sobald das in
der Röstmaschine geröstete Röstgut einen vorbestimmten
Röstgrad erreicht.

Diese Aufgabe wird erfindungsgemäss dadurch gelöst, dass
ein auf die Farbe des Röstguts in der Röstmaschine
ansprechendes Farbmessgerät ein dieser Farbe entsprechendes
elektrisches Messignal liefert, das in einer Vergleichs=
schaltung mit einem elektrischen, der Farbe des Röstguts
mit dem gewünschten Röstgrad entsprechenden Bezugssignal
vergleichbar und das Ausgangssignal dieser Vergleichs=
schaltung in eine die Abschaltfunktionen der Röstmaschine steuernde Logikschaltung einspeisbar ist.

Das elektrische Bezugssignal, das in der Vergleichsschaltung mit dem vom Farbmessgerät gelieferten, der Farbe des Röst= guts in der Röstmaschine entsprechenden Messignal ver= gl-ichen wird, kann beliebig, z.B. rein elektrisch erzeugt und geregelt werden. Besonders zweckmässig erweist sich jedoch eine bevorzugte Ausführungsform der Erfindung, bei der ein weiteres Farbmessgerät vorgesehen ist, das auf die Farbe einer fertig gerösteten Röstgutprobe mit dem ge= wünschten Röstgrad oder auf die Farbe einer korrespondierend gefärbten Fläche anspricht und ein dieser Farbe entsprechen= des elektrisches Ausgangssignal als Bezugssignal liefert.

Als Farbmessgeräte können beliebige Geräte benutzt werden, die die Farbe des beobachteten Röstguts in ein entsprechen= des elektrisches Signal (Spannung oder Strom) umwandeln. Als besonders vorteilhaft haben sich Photometer erwiesen. Vorzugsweise sind die als Farbmessgeräte benutzten Photo= meter auch oder hauptsächlich oder ausschliesslich auf die Infrarotstrahlung empfindlich.

Weitere Merkmale und Vorteile der Erfindung ergeben sich aus den Unteransprüchen und aus nachstehender Beschreibung eines in der Zeichnung schematisch dargestellten Ausführungs= beispiels.

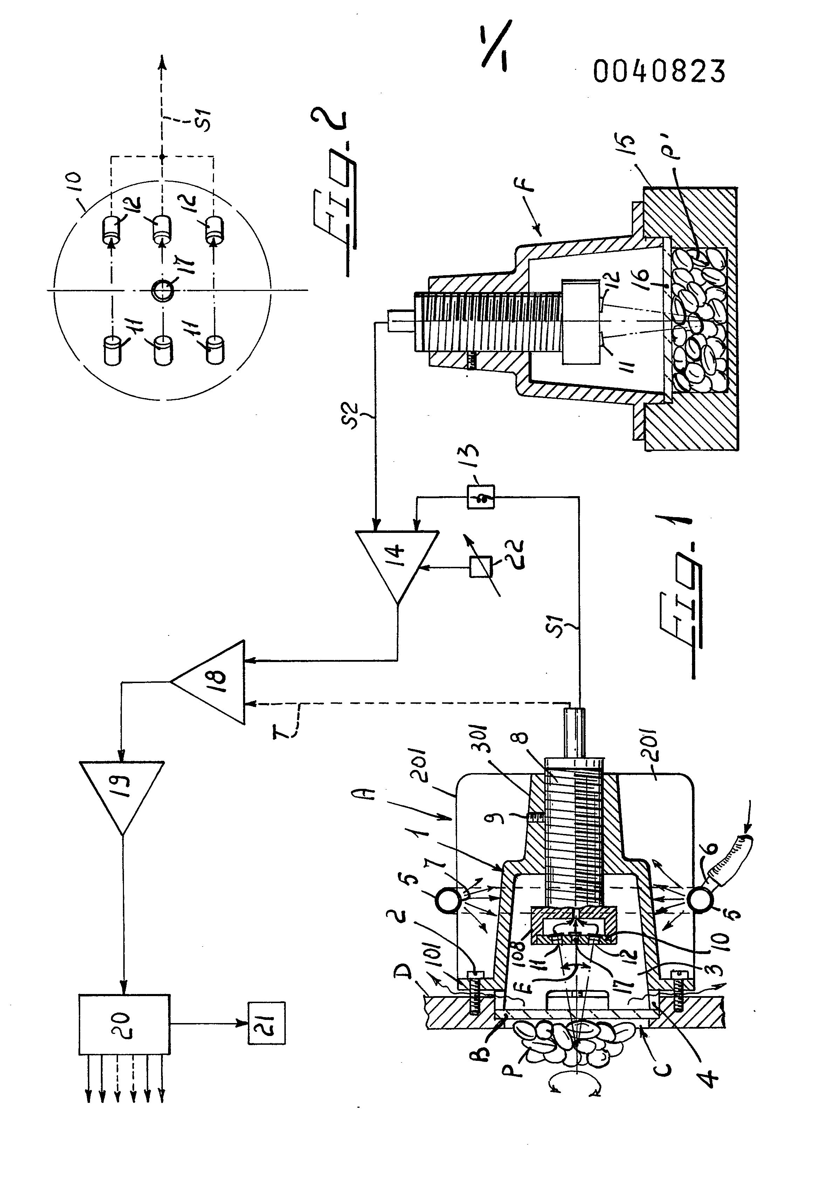

Fig. 1 zeigt ein Blockschaltbild einer erfindungs= gemässen Steuervorrichtung mit einem ersten, auf die Farbe des Röstguts in der Röstmaschine ansprechenden

- 3 -    0040823

Farbmessgerät und einem zweiten, auf die Farbe einer Röstgutprobe mit dem gewünschten Röstgrad ansprechen= den Farbmessgerät; Fig. 2 ist eine Stirnansicht auf den Messkopf des ersten Farbmessgeräts mit den darauf vorgesehenen Photometern.

Die dargestellte Steuervorrichtung betrifft eine Kaffeeröst= maschine und weist ein Farbmessgerät A auf, das auf die Farbe der in der Röstmaschine gerösteten Kaffeebohnen P anspricht. Die Kaffeebohnen P in der Röstmaschine werden dabei durch eine Glasscheibe B beobachtet, die eine ent= sprechende Beobachtungsöffnung C in der Wand D der Röst= maschine abschliesst. Die Glasscheibe B wird dabei von aussen durch den freien Rand eines glockenförmigen Gehäuses 1 gegen einen Umfangsabsatz der Beobachtungsöffnung C in der Röstmaschinenwand D gedrückt und festgehalten. Das glockenförmige Gehäuse 1 des Farbmessgeräts A wird mit Hilfe eines äusseren Flansches 101 mittels Schrauben 2 aussen an der Wand D der Röstmaschine befestigt. Der Befestigungs= flansch 101 liegt dabei im Abstand von der Röstmaschinenwand D. In dem gegen die Glasscheibe B der Beobachtungsöffnung C anliegenden Rand des glockenförmigen Gehäuses 1 sind Ein= schnitte 4 vorgesehen, die sich bis zum Befestigungsflansch 101 erstrecken. Infolgedessen kann die Aussenluft durch den ringförmigen, zwischen dem Befestigungsflansch 101 und der Röstmaschinenwand D gebildeten Luftspalt und durch die mit diesem Luftspalt in Verbindung stehenden Randeinschnitte 4 in den Innenraum 3 des Gehäuses 1 einströmen und dessen Kühlung bewirken. Gleichzeitig wird aber das Eindringen von äusserem Licht in das Gehäuse 1 des Farbmessgeräts A praktisch verhindert bzw. wesentlich herabgesetzt.

Das Gehäuse 1 des Farbmessgeräts A weist ausserdem äussere, radial gerichtete Kühlrippen 201 auf und ist von einer äusseren, ringförmigen Kühlluftleitung 5 umgeben, die über einen Nippel 6 mit einer Druckluftquelle verbunden ist. Die Kühlluft wird durch einen Kranz von inneren Blasbohrungen 7 der ringförmigen Kühlluftleitung 5 gegen das Gehäuse 1 des Farbmessgeräts A geblasen. Das Gehäuse 1 besteht aus undurchsichtigem, vorzugsweise gut wärmeleitendem Werkstoff.

Auf seiner der Kaffeeröstmaschine abgekehrten Seite weist das Gehäuse 1 des Farbmessgeräts A einen mittleren Ansatz 301 auf, durch welchen ein rohrförmiger Gewindeschaft 8 geschraubt ist. Der Gewindeschaft 8 besteht vorzugsweise aus elektrisch isolierendem Werkstoff und wird mit Hilfe einer quergerichteten Klemmschraube 9 im Gehäuseansatz 301 fest= gesetzt. Im Inneren 3 des glockenförmigen Gehäuses 1 weist der Gewindeschaft 8 einen hohlen Messkopf 108 auf, der auf seiner gegen die Glasscheibe B der Beobachtungsöffnung C gerichteten Vorderseite von einer Scheibe 10 abgeschlossen ist. Diese Scheibe 10 trägt ein oder mehrere Photometer 11, die gegen die Beobachtungsöffnung C gerichtet sind und auf die Farbe der in der Röstmaschine hinter der Glasscheibe B röstenden Kaffeebohnen P ansprechen.

In dem dargestellten Ausführungsbeispiel sind auf der Scheibe 10 des Messkopfs 108 im Inneren des Gehäuses 1 drei nebeneinander angeordnete Photometer 12 vorgesehen, die je einer gegenüberliegenden, ebenfalls auf der Scheibe 10 vorgesehenen Lichtquelle 11 zugeordnet sind. Die optischen Achsen jedes Photometers 12 und der zugeordneten Lichtquelle 11 befinden sich in der selben Ebene und sind derart gegen= einander d.h. konvergierend geneigt, dass das von der Lichtquelle 11 auf die Kaffeebohnen P in der Röstmaschine geworfene Licht in den zugeordneten Photometer 12 reflektiert wird. Der zwischen den optischen Achsen jeder Lichtquelle 11 und des zugeordneten Photometers 12 gebildete Winkel E beträgt vorzugsweise etwa 13° – 15°. Die Anzahl und der gegenseitige Abstand der Photometer 12 sind so gewählt, dass ein möglichst grosses Feld der in der Röstmaschine röstenden Kaffeebohnenmasse P erfasst wird. Es ist jedoch möglich, in dem Farbmessgerät A auch nur ein einziges Photo= meter 12 mit zugeordneter Lichtquelle 11 anzuordnen. Die benutzten Photometer können auch oder hauptsächlich oder ausschliesslich auf die Infrarotstrahlung ansprechen. Die Photometer 12 sind vorzugsweise in Parallelschaltung unter= einander mit einem einzigen Ausgang S1 des Farbmessgeräts A verbunden. Der betreffende elektrische Leiter ist durch die koaxiale Bohrung des Gewindeschafts 8 aus dem Gehäuse 1 des Farbmessgeräts A herausgeführt.

In der Mitte zwischen den Photometern 12 und den zugeord= neten Lichtquellen 11 ist auf der Scheibe 10 des Messkopfs 108 im Inneren des Gehäuses 1 ein elektrisches Thermometer 17 angeordnet, dass auf die Temperatur der Kaffeebohnen P in der Röstmaschine anspricht und ein entsprechendes elektri= sches Signal liefert. Der Ausgang T dieses Thermometers 17 ist gestrichelt in Fig. 1 dargestellt und der betreffende elektrische Leiter ist ebenfalls durch die mittlere Bohrung

0040823

des Gewindeschafts 8 aus dem Gehäuse 1 des Farbmessgeräts A herausgeführt.

Die Photometer 12 liefern am Ausgang S1 des Farbmessgeräts A ein elektrisches Messignal, das der Farbe der in der Röstmaschine gerösteten Kaffeebohnen P entspricht und von einer Ausgleichsschaltung 13 geglättet wird. Anschliessend wird dieses Messignal in einer Vergleichschaltung 14 mit einem elektrischen Bezugssignal verglichen, das der Farbe der fertig gerösteten Kaffeebohnen P mit dem gewünschten Röstgrad entspricht. In dem dargestellten Ausführungsbei= spiel wird das elektrische Bezugssignal von einem weiteren Farbmessgerät F geliefert, das einen ähnlichen Aufbau wie das bereits beschriebene Farbmessgerät A aufweist, jedoch auf die Farbe einer fertig gerösteten, in einem Gehäuse P' hinter einer Glasscheibe 16 verschlossenen Kaffeebohnen= probe P' mit dem gewünschten Röstgrad anspricht. Dieses Farbmessgerät F kann ebenfalls ein einziges Photometer 12 oder mehrere nebeneinander angeordnete, parallelgeschaltete Photometer 12 mit zugeordneten Lichtquellen 11 aufweisen, braucht jedoch kein Thermometer 17 zu haben, da die Kaffee= bohnenprobe P' normalerweise die gewöhnliche Zimmertemperatur besitzt. Der Ausgang S2 des Farbmessgeräts F ist mit der Vergleichsschaltung 14 verbunden.

Die Vergleichsschaltung 14 liefert an ihrem Ausgang ein elektrisches Signal, das der Differenz zwischen dem Messignal des Farbmessgeräts A und dem Bezugssignal des Farbmessgeräts F entspricht. Allerdings entspricht diese Differenz nicht dem tatsächlichen Farbunterschied zwischen den in der Röstmaschine gerösteten Kaffeebohnen P und der fertig gerösteten Kaffeebohnenprobe P', da das Messignal von der Temperatur der Kaffeebohnen P in der Röstmaschine bzw. von der davon abhängigen Temperatur im glockenförmigen Gehäuse 1 des Farbmessgeräts A beeinflusst wird. Infolgedessen wird die Differenz zwischen dem Messignal des Farbmessgeräts A und dem Bezugssignal des Farbmessgeräts F in einer Kompensationsschaltung 18 durch das am Ausgang T des Thermometers 17 anstehende Signal entsprechend der genannten Temperatur korrigiert.

Die Kompensationsschaltung 18 liefert an ihrem Ausgang ein elektrisches Signal, das im wesentlichen der tatsächlichen Farbdifferenz zwischen den in der Röstmaschine gerösteten Kaffeebohnen P und der fertig gerösteten Kaffeebohnenprobe P' entspricht. Dieses Signal wird über eine Verstärker= schaltung 19 in eine Logikschaltung 20 eingeführt. Sobald die in der Röstmaschine gerösteten Kaffeebohnen P die selbe Farbe der fertig gerösteten Kaffeebohnenprobe P' annehmen, schaltet die Logikschaltung 20 die Röstmaschine ab, d.h. führt die zum Stillsetzen der Röstmaschine erforderlichen Steuerungen in der erforderlichen Reihenfolge selbsttätig durch. Gleichzeitig wird das Ende des Röstvorgangs von einem Anzeigegerät 21 angezeigt.

Die Vergleichsschaltung 14 kann mit Hilfe einer Regel= schaltung 22 eingestellt, insbesondere auf Null gestellt d.h. ins Gleichgewicht gebracht oder derart in dem einen oder anderen Sinn aus dem Gleichgewicht gebracht werden, dass das Ausgangssignal der Kompensationsschaltung 18 die

- 8 -

0040823

Logikschaltung 20 voreilend oder nacheilend d.h. vor bzw. nach dem Erreichen der Farbgleichheit zwischen den Kaffee= bohnen P in der Röstmaschine und der Kaffeebohnenprobe P' zum Ausschalten der Röstmaschine ansteuert.

Die Erfindung ist selbstverständlich nicht auf das darge= stellte und beschriebene Ausführungsbeispiel beschränkt. So z.B. kann das der Farbe einer Kaffeebohnenprobe mit dem gewünschten Röstgrad entsprechende Bezugssignal auch rein elektrisch erzeugt oder mit Hilfe eines Farbmessgeräts von einer einfachen farbigen Fläche und nicht von einer fertig gerösteten Kaffeebohnenprobe P' abgeleitet werden. Ausserdem kann die elektrische Schaltung zum Vergleich des Messignals mit dem Bezugssignal einen beliebigen, anderen, den Fachleuten leicht verständlichen Aufbau aufweisen. Auch die Farbmessgeräte A bzw. F können beliebig ausgebildet sein. Insbesondere ist eine andere Beleuchtung der in der Röst= maschine gerösteten Kaffeebohnen P bzw. der fertig geröste= ten Kaffeebohnenprobe P' möglich.

0040823

## Patentansprüche

1. Steuervorrichtung für Röstmaschinen, insbesondere Kaffeeröstmaschinen, dadurch gekennzeichnet, dass ein auf die Farbe des Röstguts (P) in der Röstmaschine ansprechen= des Farbmessgerät (A) ein dieser Farbe entsprechendes elektrisches Messignal liefert, das in einer Vergleichs= schaltung (14) mit einem elektrischen, der Farbe des Röst= guts mit dem gewünschten Röstgrad entsprechenden Bezugs= signal vergleichbar und das Ausgangssignal dieser Ver= gleichschaltung (14) in eine die Abschaltfunktionen der Röstmaschine steuernde Logikschaltung (20) einspeisbar ist.

2. Steuervorrichtung nach Anspruch 1, dadurch gekennzeichnet, dass ein weiteres Farbmessgerät (F) vorgesehen ist, das auf die Farbe einer fertig gerösteten Röstgutprobe mit dem gewünschten Röstgrad oder auf die Farbe einer entsprechend gefärbten Fläche anspricht und ein dieser Farbe entsprechen= des elektrisches Ausgangssignal als Bezugssignal liefert.

3. Steuervorrichtung nach Anspruch 1 oder 2, dadurch gekenn= zeichnet, dass das Farbmessgerät (A bzw. F) mindestens ein mit der Vergleichsschaltung (14) verbundenes Photometer (12) aufweist.

4. Steuervorrichtung nach Anspruch 3, dadurch gekennzeichnet, dass zumindest das auf die Farbe des Röstguts (P) in der Röstmaschine ansprechende Farbmessgerät (A) mehrere, neben= einander angeordnete, untereinander parallelgeschaltete Photometer (12) aufweist.

5. Steuervorrichtung nach Anspruch 3 und 4, dadurch gekenn= zeichnet, dass jedem Photometer (12) eine Lichtquelle (11) zugeordnet ist, wobei die optischen Achsen jedes Photometers (12) und der zugeordneten Lichtquelle (11) in der selben Ebene liegen und gegeneinander um den selben Winkel gegen= über einer Senkrechten zur Röstgutebene geneigt sind.

6. Steuervorrichtung nach Anspruch 5, dadurch gekennzeichnet, dass die optischen Achsen jedes Photometers (12) und der zugeordneten Lichtquelle (11) einen Winkel (E) von etwa 13° - 15° einschliessen.

7. Steuervorrichtung nach einem der Ansprüche 1 bis 6, gekennzeichnet durch ein elektrisches Thermometer (17) das auf die Temperatur des Röstguts (P) in der Röstmaschine und/oder auf die Temperatur des auf dieses Röstgut (P) gerichteten Farbmessgeräts (A) anspricht und dessen Ausgang (T) mit einer Kompensationsschaltung (18) zur Korrektur des am Ausgang (S1) des Farbmessgeräts (A) anstehenden Messignals und/oder des von der Vergleichsschaltung (14) gelieferten, der Differenz zwischen dem Messignal und dem Bezugssignal entsprechenden Ausgangssignals verbunden ist.

8. Steuervorrichtung nach einem der Ansprüche 1 bis 7, dadurch gekennzeichnet, dass der Ausgang (S1) des auf die Farbe des Röstguts (P) in der Röstmaschine ansprechenden Farbmessgeräts (A) über eine Ausgleichsschaltung (13) mit der Vergleichsschaltung (14) verbunden ist.

9. Steuervorrichtung nach einem der Ansprüche 1 bis 8, dadurch gekennzeichnet, dass die Logikschaltung (20) auch ein Anzeigegerät (21) steuert.

10. Steuervorrichtung nach einem der Ansprüche 1 bis 9, dadurch gekennzeichnet, dass die Photometer (12) der Farb= messgeräte (A bzw. F) auch oder hauptsächlich oder aus= schliesslich auf die Infrarotstrahlung empfindlich sind.

11. Steuervorrichtung nach einem der Ansprüche 1 bis 10, dadurch gekennzeichnet, dass die Vergleichsschaltung (14) mit Hilfe einer Regelschaltung (22) wahlweise ins Gleichge= wicht oder aus dem Gleichgewicht zugunsten des Messignals oder des Bezugssignals bringbar ist.

12. Steuervorrichtung nach einem der Ansprüche 1 bis 11, dadurch gekennzeichnet, dass das auf die Farbe des Röstguts (P) in der Röstmaschine ansprechende Farbmessgerät (A) ein glockenförmiges, mit seiner offenen Seite gegen die Glas= scheibe (B) einer Beobachtungsöffnung (C) in der Röst= maschinenwand (D) befestigtes, mit Kühlrippen (201) ver= sehenes Gehäuse (1) aufweist, das von mindestens einer Kühlluftleitung (5) mit Blasöffnungen (7) umgeben und über verdeckt bzw. abgeschirmt angebrachte Kühlöffnungen (4) mit der Aussenluft verbunden ist, wobei in diesem Gehäuse (1) ein gegen die Beobachtungsöffnung (C) in der Röstmaschinen= wand (D) gerichteter Messkopf (10, 108) mit mindestens einem Photometer (11), einer zugeordneten Lichtquelle (12) und einem elektrischen Thermometer (17) angeordnet ist.

13. Steuervorrichtung nach Anspruch 12, dadurch gekenn= zeichnet, dass das glockenförmige Gehäuse (1) des Farb=
messgeräts (A) im Abstand von seinem Öffnungsrand einen
äusseren im Abstand von der Röstmaschinenwand (D) liegenden
Befestigungsflansch (101) aufweist und in seinem gegen die
Glasscheibe (B) der Beobachtungsöffnung (C) anliegenden
Öffnungsrand mindestens ein sich bis zum Befestigungs=
flansch (101) erstreckender Einschnitt (4) als Kühlöffnung
vorgesehen ist.

1/1

0040823

Fig. 2

Fig. 1

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>DE - B - 1 029 295</u> (SIEGFRIED PAUL)<br><br>* Spalte 2, Zeile 25 - Spalte 4, Zeile 2 * | 1,3,5, 8-12 | A 23 N 12/12 |
| | -- | | |
| | <u>DE - B - 1 023 412</u> (EMMERICHER <u>MASCHINENFABRIK VON</u> GIMBORN & CO. K.G.)<br><br>* Spalte 1, Zeile 34 - Spalte 2, Zeile 41; Figur 1 * | 1,3,5, 9,12, 13 | |
| | -- | | RECHERCHIERTE SACHGEBIETE (Int. Cl.³) |
| | <u>US - A - 2 010 582</u> (W.G. BURNS et al.)<br><br>* Seite 1, rechte Spalte, Zeilen 7-18, Seite 2, linke Spalte Zeilen 17-32 * | 1,7 | A 23 N<br>A 23 F |
| | -- | | |
| | <u>US - A - 2 278 767</u> (W.T. BROPHY)<br><br>* Seite 1, linke Spalte, Zeile 45 - Seite 1, rechte Spalte Zeile 3; Seite 2, linke Spalte, Zeile 31 - Seite 2, rechte Spalte, Zeile 69; Figuren 2,8 * | 1,3,5, 9 | |
| | -- | | KATEGORIE DER GENANNTEN DOKUMENTE |
| | <u>GB - A - 645 131</u> (A.S. TORRES)<br><br>* Seite 3, Zeile 68 - Seite 4, Zeile 24; Figur 14 * | 1,3,5, 9,10 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | ---- | | |
| | Der vorliegende Recherchenbericht wurde für alle Patentansprüche erstellt. | | &: Mitglied der gleichen Patent-<br>familie, übereinstimmendes<br>Dokument |

| Recherchenort | Abschlußdatum der Recherche | Prüfer |
|---|---|---|
| Den Haag | 29-07-1981 | NEHRDICH |

EPA form 1503.1 06.78